# EUROPÄISCHE PATENTANMELDUNG

(11) **EP 1 970 747 A1**
(43) Veröffentlichungstag der Anmeldung: **17.09.2008**
(21) Anmeldenummer: 08004021.5
(22) Anmeldetag: 04.03.2008
(51) Int. Cl.: G02B 21/33, G02B 21/34

(54) **Haltevorrichtung für Objektträger**

(30) Priorität: 16.03.2007 DE 102007012719
(71) Anmelder: MetaSystems Hard & Software GmbH, 68804 Altlussheim (DE)
(72) Erfinder: Lörch, Thomas, 68799 Reilingen (DE); Schunck, Christian, 59823 Aschheim (DE)
(74) Vertreter: Müller-Boré & Partner Patentanwälte

(57) **Zusammenfassung**

Haltevorrichtung für Objektträger, insbesondere für Objektträger zur Analyse durch Mikroskope, vorgesehen, umfassend eine Rahmeneinheit mit einer Vielzahl von in einer Längsrichtung angeordneten Objektträgeraufnahmen zur Aufnahme von Objektträgern und eine Halteeinheit, welche ausgelegt ist, die Rahmeneinheit aufzunehmen und zumindest in Längsrichtung zu positionieren, wobei in zumindest einer Objektträgeraufnahme der Rahmeneinheit ein Kontaktfluidspeicher vorgesehen ist.

## Beschreibung

Die vorliegende Erfindung bezieht sich auf eine Haltevorrichtung für Objektträger, eine Vorrichtung zum Analysieren von Objektträgern sowie auf ein Verfahren zur automatisierten Analyse von Objektträgern, welche insbesondere durch Mikroskope durchgeführt wird.

Die in Frage stehenden Objektträger oder Traggläser werden üblicherweise durch eine Glasplatte konstituiert, auf welcher kleine Gegenstände (Objekte), vorzugsweise unter einem Deckglas, mikroskopisch betrachtet werden. Entsprechende Haltevorrichtungen und Vorrichtungen zum Analysieren von Objektträgern sind hinlänglich aus dem Stand der Technik bekannt. Diese dienen insbesondere zur Metaphasenanalyse, zur Interphasenfluoreszenz-*insitu*-Hybridisierungsanalyse, zur Immunofluoreszenzanalyse oder anderen diagnostischen Anwendungen, bei welchen die Objektträger mittels eines systematischen Testverfahrens untersucht werden, das eingesetzt wird, um innerhalb eines definierten Prüfbereichs bestimmte Eigenschaften der Prüfobjekte zu identifizieren. Bei derartigen Testverfahren ist es jedoch oftmals notwendig, das Objektiv der optischen Erfassungseinheit mit einem Kontaktfluid zu benetzen, um bestimmte Eigenschaften der Prüfobjekte zu identifizieren. Aus Effektivitätsgründen ist es hierbei besonders wünschenswert, das Testverfahren so zu gestalten, daß dieses im wesentlichen automatisch oder unbeaufsichtigt durchgeführt werden kann.

Es ist daher Aufgabe der vorliegenden Erfindung eine Haltevorrichtung für Objektträger, insbesondere für Objektträger zur Analyse durch Mikroskope, eine Vorrichtung zum Analysieren von Objektträgern sowie ein Verfahren zur automatisierten Analyse von Objektträgern bereitzustellen, welche ein unbeaufsichtigtes Testen bzw. Analysieren der Prüfobjekte auf dem Objektträger ermöglichen.

Diese Aufgabe wird durch eine Haltevorrichtung für Objektträger, insbesondere für Objektträger zur Analyse durch Mikroskope, gemäß Anspruch 1, eine Vorrichtung zum Analysieren von Objektträgern gemäß Anspruch 6, sowie ein Verfahren zur automatisierten Analyse von Objektträgern gemäß Anspruch 10 gelöst. Bevorzugte Ausführungsformen sind Gegenstand der abhängigen Ansprüche.

Erfindungsgemäß ist eine Haltevorrichtung für Objektträger, insbesondere für Objektträger zur Analyse durch Mikroskope, vorgesehen, umfassend eine Rahmeneinheit mit einer Vielzahl von in einer Längsrichtung angeordneten Objektträgeraufnahmen zur Aufnahme von Objektträgern und eine Halteeinheit, welche ausgelegt ist, die Rahmeneinheit aufzunehmen und zumindest in Längsrichtung zu positionieren, wobei in zumindest einer Objektträgeraufnahme der Rahmeneinheit ein Kontaktfluidspeicher vorgesehen ist. Die Haltevorrichtung dient insbesondere der Aufnahme bzw. Befestigung bzw. Anordnung für Objektträger, die insbesondere als Glasplatte ausgebildet sein können. Hierauf können Prüfobjekte angeordnet sein, welche besonders vorteilhafterweise durch Mikroskope analysiert werden können. Neben Mikroskopen können ebenfalls alternative optische Erfassungseinheiten, wie beispielsweise eine Kamera o. ä., zum Einsatz kommen. Die Haltevorrichtung weist eine Rahmeneinheit mit einer Vielzahl von in einer Längsrichtung angeordneten Objektträgeraufnahmen zur Aufnahme von Objektträgern auf. Die Rahmeneinheit kann somit insbesondere einen oder mehrere Rücksprünge aufweisen, um Objektträger aufzunehmen. Es können jedoch auch alternative Objektträgeraufnahmen vorgesehen sein, wie Befestigungsmittel, um die Objektträger an der Rahmeneinheit, z.B. durch eine Klemmung, zu befestigen bzw. zu fixieren. Die Objektträgeraufnahmen sind in einer Längsrichtung an bzw. auf der Rahmeneinheit angeordnet. Vorteilhafterweise ist die Rahmeneinheit in der durch die Anordnung der Objektträgeraufnahmen definierten Längsrichtung mittels einer Halteeinheit derart positionierbar, daß die Rahmeneinheit in Bezug auf die optische Erfassungseinheit bzw. das Mikroskop zumindest in Längsrichtung positioniert bzw. verschoben werden kann. Hierfür ist die Halteeinheit vorteilhafterweise ausgelegt, die Rahmeneinheit aufzunehmen, wobei dies dahingehend zu verstehen ist, daß eine unmittelbare oder mittelbare Befestigung der Rahmeneinheit an der Halteeinheit erfolgt. Infolgedessen kann die Rahmeneinheit mit der Halteeinheit integral bzw. einstückig bzw. einteilig ausgebildet sein. Vorteilhafterweise ist diese jedoch separat von der Halteeinheit ausgebildet, wobei die Rahmeneinheit besonders zweckmäßigerweise modular in der Halteeinheit derart anordenbar ist, daß eine Vielzahl von Rahmeneinheiten in einem Magazin angeordnet sein können, welche sequentiell zur Analyse nacheinander in der Haltevorrichtung bzw. der Halteeinheit angeordnet werden. In zumindest einer Objektträgeraufnahme der Rahmeneinheit ist ein Kontaktfluidspeicher vorgesehen. Der Kontaktfluidspeicher ist ausgebildet, ein Kontaktfluid zu beherbergen. Dieses Kontaktfluid dient der Benetzung eines Objektivs der optischen Erfassungseinheit bzw. des Mikroskops, um somit das Objektiv optisch sehr nahe an das Prüfobjekt anzunähern, wodurch die Prüfung bei einer sehr hohen Vergrößerung vorgenommen werden kann. Da der Kontaktfluidspeicher in zumindest einer Objektträgeraufnahme der Rahmeneinheit angeordnet ist, ist es somit möglich, das Objektiv durch dessen Annäherung an den Kontaktfluidspeicher zu benetzen. Dieser Vorgang entspricht im wesentlichen einer Annäherung des Objektivs an das Prüfobjekt eines Objektträgers, welcher Schritt im wesentlichen automatisch durchgeführt werden kann. Daher ist es möglich, die Benetzung bzw. das Kontaktieren des Objektivs mit dem Kontaktfluid ebenfalls automatisch durchzuführen. Infolgedessen ist erfindungsgemäß keine zusätzliche motorisierte Hardware und keine aktive Fluid-Handling- oder Einspritzvorrichtung (wie eine Micropipette) notwendig. Es versteht sich, daß zusätzlich oder anstelle des Objektivs eine anderes geeignete Vorrichtung vorgesehen sein kann, welche ausgelegt ist, das Kontaktfluid zweckmäßigerweise passiv aufzunehmen, um den Objektträger zu benetzen. Dies könnte insbesondere eine Glaskapillare sein, wodurch vorteilhafterweise die Menge an aufgenommenen oder aufzunehmenden Kontaktfluid exakt bestimmt bzw. festgelegt werden kann. Somit ist es vorteilhafterweise möglich, die erfindungsgemäße Haltevorrichtung leicht zu produzieren und an existierende Systeme anzupassen, wobei keine zusätzlichen Reinigungs- und Wartungsarbeiten notwendig werden.

Vorzugsweise ist der Kontaktfluidspeicher als zumindest einseitig offen ausgebildetes Behältnis ausgebildet. Das Behältnis ist insbesondere in Richtung der optischen Erfassungseinheit bzw. einem Objektiv der optischen Erfassungseinheit einer Vorrichtung zum Analysieren von Objektträgern offen ausgebildet. Das Behältnis kann insbesondere als Wanne ausgebildet sein. Besonders vorteilhaft entspricht die periphere Außenkonfiguration des Behältnisses derjenigen der Objektträger, so daß das Behältnis über die gleichen Fixier- bzw. Befestigungsmittel an der Rahmeneinheit befestigbar bzw. fixierbar ist.

Vorteilhafterweise ist der Kontaktfluidspeicher einstückig bzw. einteilig mit der Rahmeneinheit ausgebildet. So können bei der einteiligen Ausführung der Kontaktfluidspeicher und die Rahmeneinheit über ein Spritzgußverfahren aus dem selben Material (insbesondere Kunststoff) ausgebildet sein. Bei der einstückigen Ausbildung von Rahmeneinheit und Kontaktfluidspeicher ist es vorteilhafterweise möglich, den Kontaktfluidspeicher aus einem vom Material der Rahmeneinheit unterschiedlichen Material auszubilden. Infolgedessen sind Kontaktfluidspeicher und Rahmeneinheit im wesentlichen integral ausgebildet.

Zweckmäßigerweise ist der Kontaktfluidspeicher separat von der Rahmeneinheit ausgebildet. Hierdurch wird vorteilhafterweise eine Haltevorrichtung geschaffen, bei welcher der Kontaktfluidspeicher lösbar bzw. trennbar von der Rahmeneinheit ist. Somit kann der Kontaktfluidspeicher der erfindungsgemäßen Haltevorrichtung an verschiedene Objektive der optischen Erfassungseinheit und/oder an verschiedene Kontaktfluide angepaßt werden.

Vorteilhafterweise ist die Halteeinheit ausgelegt, die Rahmeneinheit in Querrichtung zu positionieren. Die Querrichtung ist im wesentlichen rechtwinklig zur Längsrichtung orientiert, wobei Querrichtung und Längsrichtung vorteilhafterweise im wesentlichen in einer Ebene liegen, welche parallel zur Ebene der Objektträgererstreckung liegt. Die Objektträgererstreckung ist dahingehend zu verstehen, daß diese im wesentlichen der Fläche des Objektträgers entspricht, auf welcher das Prüfobjekt positioniert ist.

Ferner erfindungsgemäß ist eine Vorrichtung zum Analysieren von Objektträgern vorgesehen, umfassend eine optische Erfassungseinheit mit einem Objektiv und eine Haltevorrichtung für zumindest einen Objektträger, die eine Rahmeneinheit mit einer Vielzahl von in einer Längsrichtung angeordneten Objektträgeraufnahmen zur Aufnahme der Objektträger und eine Halteeinheit aufweist, welche ausgelegt ist, die Rahmeneinheit aufzunehmen und zumindest in Längsrichtung zu positionieren, wobei in zumindest einer Objektträgeraufnahme der Rahmeneinheit ein Kontaktfluidspeicher vorgesehen ist. Die optische Erfassungseinheit kann vorteilhafterweise als Kamera oder Mikroskop, welches zweckmäßigerweise eine Kamera beinhaltet, ausgebildet sein.

Vorzugsweise ist der Kontaktfluidspeicher als Behältnis ausgebildet, welches zumindest in Richtung der optischen Erfassungseinheit offen ist. So ist das Behältnis insbesondere bei einer Anordnung der optischen Erfassungseinheit über dem Kontaktfluidspeicher in Richtung der optischen Erfassungseinheit offen. Hierdurch ist es möglich, durch eine Relativbewegung des Objektivs und des Behältnisses zueinander in einer Vertikalrichtung (welche im wesentlichen orthogonal zur von der Längs- und Querrichtung aufgespannten Ebene steht) eine Kontaktierung des Objektivs mit dem in dem Kontaktfluidspeicher vorgesehenen Kontaktfluid zu erzielen.

Zweckmäßigerweise ist das Objektiv der optischen Erfassungseinheit zwischen einer ersten, von dem Kontaktfluidspeicher beabstandeten Position und einer zweiten, zumindest teilweise in dem Kontaktfluidspeicher angeordneten Position bewegbar, in welcher das Objektiv das in dem Kontaktfluidspeicher vorgesehene bzw. vorzusehende Fluid kontaktiert. Es wird somit vorteilhafterweise eine Vorrichtung geschaffen, bei welcher das Objektiv der optischen Erfassungseinheit in einer ersten Position bzw. Vertikalposition anordenbar ist, in welcher das Objektiv im wesentlichen vertikal über dem Kontaktfluidspeicher und von diesem beabstandet angeordnet ist. In der zweiten Position bzw. Vertikalposition ist das Objektiv der optischen Erfassungseinheit in Bezug auf die erste Vertikalposition zumindest in einer Vertikalrichtung derart verschoben, daß das Objektiv zumindest teilweise innerhalb des Kontaktfluidspeichers angeordnet ist.

Zweckmäßigerweise weist die optische Erfassungseinheit eine Fokusiereinheit auf, um das Objektiv zwischen der ersten und der zweiten Position zu bewegen. Infolgedessen ist es möglich, eine Benetzung des Objektivs mit Kontaktfluid durch Mittel zu bewirken, welche in der Regel standardmäßig Teil einer optischen Erfassungseinheit sind. Daher sind keine weiteren Kontaktfluidhandhabungsvorrichtungen (wie z.B. Kontaktfluideinspritzvorrichtungen) notwendig.

Es versteht sich, daß die weiteren Vorteile und Merkmale der erfindungsgemäßen Haltevorrichtung für Objektträger ebenfalls in der erfindungsgemäßen Vorrichtung zum Analysieren von Objektträgern Anwendung finden können und hiermit in dieser vorzugsweise inkorporiert werden.

Weiterhin erfindungsgemäß ist ein Verfahren zur automatisierten Analyse von Objektträgern vorgesehen, umfassend die Schritte: a) Bereitstellen einer Vorrichtung zum Analysieren von Objektträgern mit einer optischen Erfassungseinheit und einer Haltevorrichtung für zumindest einen Objektträger, b) Anordnen eines Kontaktfluidspeichers in einer Objektträgeraufnahme einer Rahmeneinheit der Haltevorrichtung, welche eine Vielzahl von in einer Längsrichtung angeordneten Objektträgeraufnahmen zur Aufnahme der Objektträger aufweist, c) Positionieren der optischen Erfassungseinheit über dem Kontaktfluidspeicher, d) Kontaktieren eines Objektivs der optischen Erfassungseinheit mit einem in dem Kontaktfluidspeicher vorgesehenen Kontaktfluid, und e) Positionieren des mit dem Kontaktfluid benetzten Objektivs an einem zu analysierenden Objektträger. Es wird somit vorteilhafterweise ein Verfahren zur Analyse von Objektträgern bereitgestellt, bei welchem die Benetzung des Objektivs der optischen Erfassungseinheit über die Annäherung des Objektivs an einen Kontaktfluidspeicher erfolgt, welcher vorteilhafterweise in einer Objektträgeraufnahme der Rahmeneinheit der Haltevorrichtung vorgesehen ist. Infolgedessen sind vorteilhafterweise keine weiteren Vorrichtungen und Mittel notwendig, um das Objektiv mit dem Kontaktfluid zu benetzen. Vielmehr ist das Verfahren vorteilhafterweise derart gestaltet, daß dieses automatisiert durchgeführt werden kann, ohne die Notwendigkeit weiterer, komplexer Verfahrensschritte wie dem Einspritzen von Kontaktfluid mittels zusätzlicher Einspritzvorrichtungen o. ä. Das gemäß dem Verfahren automatisch bzw. automatisiert mit Kontaktfluid benetzte Objektiv kann somit an bzw. über bzw. benachbart bzw. kontaktierend an dem zu analysierenden Objektträger bzw. dem Prüfobjekt angeordnet bzw. positioniert werden, ohne daß ein Eingriff von außen hierfür notwendig ist.

Bevorzugterweise erfolgt der Schritt d) des Kontaktierens des Objektivs mit dem Kontaktfluid durch Bewegen des Objektivs zwischen einer ersten, von dem Kontaktfluidspeicher beabstandeten Position und einer zweiten, zumindest teilweise das in dem Kontaktfluidspeicher vorgesehene Fluid kontaktierenden Position. Wie bereits erläutert, ist die erste Position bzw. Vertikalposition derart bestimmt, daß das Objektiv im wesentlichen vertikal über dem Kontaktfluidspeicher angeordnet ist. In entsprechender Art und Weise ist die zweite Position bzw. Vertikalposition derart bestimmt, daß das Objektiv - insbesondere in Vertikalrichtung - in Richtung des Kontaktfluidspeichers verschoben bzw. bewegt ist bzw. wurde. Insbesondere erfolgt eine Bewegung lediglich des Objektivs in Vertikalrichtung, wohingegen zweckmäßigerweise eine Vertikalbewegung der Rahmeneinheit der Haltevorrichtung nicht erfolgt. Es versteht sich, daß die Rahmeneinheit jedoch auch bei einem im wesentlichen statischen Objektiv in Vertikalrichtung bewegt werden kann oder daß sowohl Objektiv als auch Rahmeneinheit zueinander in Vertikalrichtung bewegt werden können.

Bevorzugterweise erfolgt die Bewegung des Objektivs zwischen der ersten und der zweiten Position durch eine Veränderung des Fokus des Objektivs. Hierdurch ist es möglich, bereits bestehende Funktionen von standardisierten optischen Erfassungseinheiten zu nutzen, um das Objektiv an den Fluidspeicher anzunähern.

Vorteilhafterweise erfolgt der Schritt e) des Positionierens des Objektivs durch eine Verschiebung der Rahmeneinheit der Haltevorrichtung im wesentlichen in Längsrichtung in Bezug auf die optische Erfassungseinheit. Hierbei kann die optische Erfassungseinheit - wie eingangs erwähnt - im wesentlichen statisch in Bezug auf eine Längs- und Querrichtung ausgebildet sein. Die Positionierung des Objektivs in Bezug auf das Prüfobjekt in einer durch die Längsrichtung und Querrichtung aufgespannten Ebene kann daher zweckmäßigerweise durch eine Verschiebung der Rahmeneinheit erfolgen.

In einer weiteren bevorzugten Ausführungsform weist das Verfahren die Schritte auf: Voranalysieren des zumindest einen Objektträgers mittels der optischen Erfassungseinheit, Positionieren des Objektivs an dem Kontaktfluidspeicher, Kontaktieren des Objektivs mit dem Kontaktfluid, und Analysieren des zumindest einen Objektträgers mittels der optischen Erfassungseinheit. Der Schritt des Voranalysierens des Objektträgers erfolgt vorteilhafterweise mittels eines zweiten bzw. anderen bzw. niedrig-auflösenden Objektivs der optischen Erfassungseinheit. Hierdurch ist es möglich, die zu untersuchenden Prüfobjekte zu identifizieren und ihre Koordinaten (insbesondere in Längs- und Querrichtung) zu speichern. Hieran anschließend wird das (erste) Objektiv, welches als vorteilhafterweise hoch-auflösendes Objektiv ausgebildet ist, mit dem Kontaktfluid benetzt. Hierfür kann zweckmäßigerweise ein im wesentlichen automatischer Objektivwechsel erfolgen, wie dies bei Mikroskopen mit einem Objektiv-Drehkopf üblich ist. Mittels dieses ersten, hoch-auflösenden und mit Kontaktfluid benetzten Objektivs werden die identifizierten Prüfobjekte erneut besucht und eine hoch-auflösende Analyse hiervon vorgenommen.

Es versteht sich, daß die weiteren Vorteile und Merkmale der erfindungsgemäßen Haltevorrichtung für Objektträger sowie der erfindungsgemäßen Vorrichtung zum Analysieren von Objektträgern ebenfalls in dem erfindungsgemäßen Verfahren zur automatisierten Analyse von Objektträgern Anwendung finden können und daher hiermit vorzugsweise inkorporiert werden.

Weitere Vorteile und Merkmale der vorliegenden Erfindung ergeben sich aus der nachfolgenden Beschreibung einer bevorzugten Ausführungsform mit Bezug auf die beigefügten Figuren, wobei die Kombination von einzelnen, besonders bevorzugten Merkmalen zu neuen Ausführungsformen der Erfindung kombiniert werden können. Es zeigt:
- Fig. 1: eine Draufsicht auf eine beispielhafte bevorzugte Ausführungsform der erfindungsgemäßen Haltevorrichtung für Objektträger;
- Fig. 2: eine Draufsicht sowie eine Querschnittsansicht einer beispielhaften bevorzugten Ausführungsform eines Kontaktfluidspeichers gemäß der Erfindung.

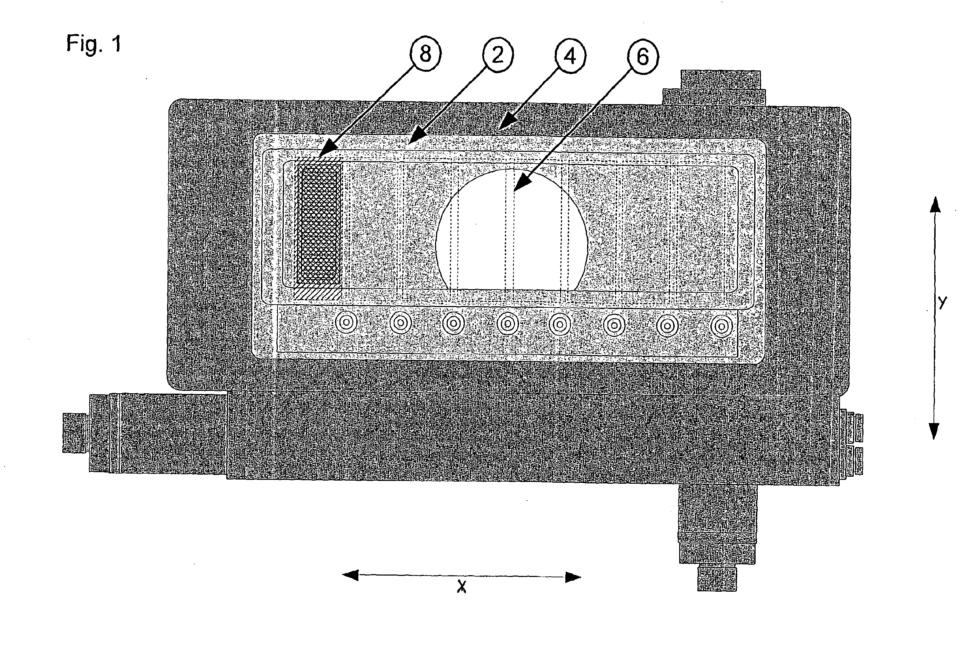

Die Haltevorrichtung gemäß der in Fig. 1 dargestellten beispielhaften, bevorzugten Ausführungsform umfaßt eine Rahmeneinheit 2 sowie eine Halteeinheit 4.

Die Rahmeneinheit 2 dient der Aufnahme von Objektträgern 6. Hierfür weist die Rahmeneinheit 2 eine Vielzahl von in einer Längsrichtung X angeordneten Objektträgeraufnahmen auf. Die Objektträgeraufnahmen dienen insbesondere der Befestigung bzw. Fixierung der Objektträger 6.

Die Halteeinheit 4 ist ausgelegt, die Rahmeneinheit 2 aufzunehmen. Ferner dient die Halteeinheit 4 der Positionierung der Rahmeneinheit 2 in Längsrichtung X. "Positionieren" ist insbesondere dahingehend zu verstehen, daß mittels der Halteeinheit 4 die Rahmeneinheit 2 in Längsrichtung X verschiebbar ist. Hierfür kann lediglich die Rahmeneinheit 2 verschoben werden. Vorteilhafterweise sind jedoch Rahmeneinheit 2 und Halteeinheit 4 ortsfest zueinander ausgebildet, so daß die Positionierung der Rahmeneinheit 2 über eine Verschiebung der Halteeinheit 4 erfolgt. Zweckmäßigerweise kann die Rahmeneinheit 2 ebenfalls in einer Querrichtung Y über die Halteeinheit 4 positioniert werden, wobei die Querrichtung Y als im wesentlichen rechtwinklig zur Längsrichtung X festgelegt ist.

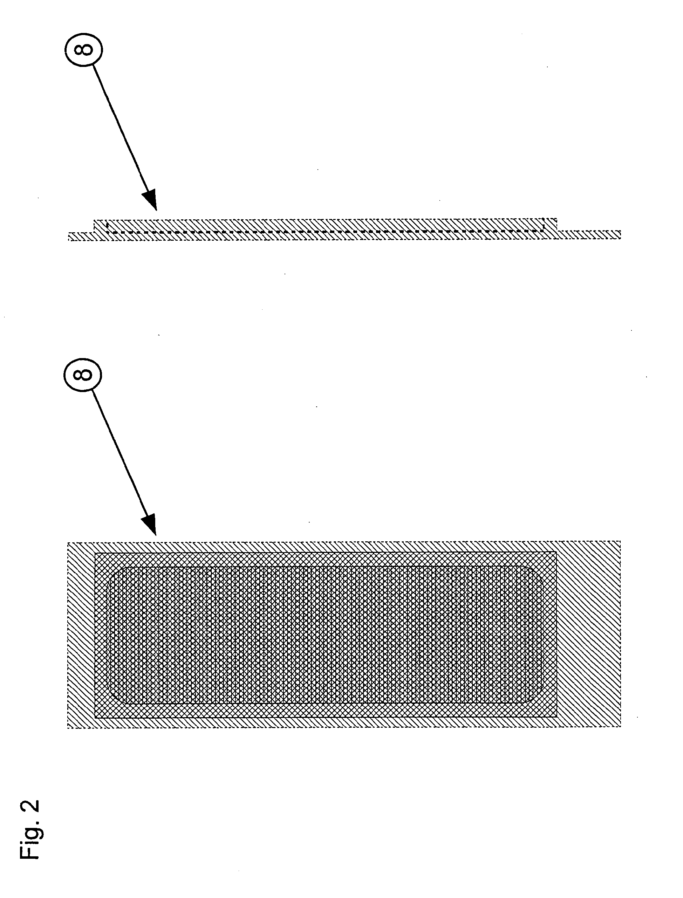

Ferner ist zumindest ein Kontaktfluidspeicher 8 vorgesehen, welcher in zumindest einer Objektträgeraufnahme der Rahmeneinheit 2 angeordnet bzw. befestigt ist. Wie aus Fig. 2 ersichtlich, ist der Kontaktfluidspeicher 8 als zumindest einseitig offen ausgebildetes Behältnis ausgebildet, welches besonders bevorzugterweise in Form einer Wanne ausgebildet ist. Die periphere Außenkonfiguration des Kontaktfluidspeichers 8 entspricht besonders vorteilhafterweise im wesentlichen derjenigen der Objektträger 6, so daß der Kontaktfluidspeicher 8 in der Objektträgeraufnahme anordenbar und befestigbar ist. Dies ist besonders gewünscht bei einer von der Rahmeneinheit 2 separaten Ausbildung des Kontaktfluidspeichers 8, so daß der Kontaktfluidspeicher 8 derart auswechselbar ist, daß eine Anpassung der in dem Kontaktfluidspeicher 8 aufzunehmenden Fluidmenge sowie der Fluidart an das Objektiv der optischen Erfassungseinheit möglich ist. In einer alternativen Ausführungsform kann der Kontaktfluidspeicher 8 jedoch auch einstückig bzw. einteilig mit der Rahmeneinheit 2 ausgebildet sein.

In der dargestellten Ausführungsform weist die Rahmeneinheit 2 acht Objektträgeraufnahmen zur Aufnahme von Objektträgern 6 auf, wobei sieben Objektträger 6 und ein Kontaktfluidspeicher 8 vorgesehen sind. Es versteht sich, daß die Rahmeneinheit 2 jedoch auch eine beliebig andere Vielzahl von Objektträgeraufnahmen aufweisen kann. Auch kann mehr als ein Kontaktfluidspeicher 8 in der Rahmeneinheit 2 angeordnet sein.

Es wird somit eine Haltevorrichtung geschaffen, bei welcher keine zusätzliche motorisierte Hardware und keine aktive Fluid-Handling- oder Einspritzvorrichtung (wie eine Micropipette) notwendig ist. Auch ist es vorteilhafterweise möglich, die erfindungsgemäße Haltevorrichtung leicht zu produzieren und an existierende Systeme anzupassen, wobei keine zusätzlichen Reinigungs- und Wartungsarbeiten notwendig werden.

### Bezugszeichenliste

- 2: Rahmeneinheit
- 4: Halteeinheit
- 6: Objektträger
- 8: Kontaktfluidspeicher
- X: Längsrichtung
- Y: Querrichtung

## Patentansprüche

1. Haltevorrichtung für Objektträger, insbesondere für Objektträger zur Analyse durch Mikroskope, umfassend
eine Rahmeneinheit (2) mit einer Vielzahl von in einer Längsrichtung (X) angeordneten Objektträgeraufnahmen zur Aufnahme von Objektträgern (6) und eine Halteeinheit (4), welche ausgelegt ist, die Rahmeneinheit (2) aufzunehmen und zumindest in Längsrichtung (X) zu positionieren,
wobei in zumindest einer Objektträgeraufnahme der Rahmeneinheit (2) ein Kontaktfluidspeicher (8) vorgesehen ist.

2. Haltevorrichtung nach Anspruch 1, wobei der Kontaktfluidspeicher (8) als zumindest einseitig offen ausgebildetes Behältnis ausgebildet ist.

3. Haltevorrichtung nach einem der vorhergehenden Ansprüche, wobei der Kontaktfluidspeicher (8) einstückig bzw. einteilig mit der Rahmeneinheit (2) ausgebildet ist.

4. Haltevorrichtung nach einem der Ansprüche 1 oder 2, wobei der Kontaktfluidspeicher (8) separat von der Rahmeneinheit (2) ausgebildet ist.

5. Haltevorrichtung nach einem der vorhergehenden Ansprüche, wobei die Halteeinheit (4) ausgelegt ist, die Rahmeneinheit (2) in Querrichtung (Y) zu positionieren.

6. Vorrichtung zum Analysieren von Objektträgern, umfassend
eine optische Erfassungseinheit mit einem Objektiv und
eine Haltevorrichtung für zumindest einen Objektträger (6), die eine Rahmeneinheit (2) mit einer Vielzahl von in einer Längsrichtung (X) angeordneten Objektträgeraufnahmen zur Aufnahme der Objektträger (6) und eine Halteeinheit (4) aufweist, welche ausgelegt ist, die Rahmeneinheit (2) aufzunehmen und zumindest in Längsrichtung (X) zu positionieren,
wobei in zumindest einer Objektträgeraufnahme der Rahmeneinheit (2) ein Kontaktfluidspeicher (8) vorgesehen ist.

7. Vorrichtung nach Anspruch 6, wobei der Kontaktfluidspeicher (8) als Behältnis ausgebildet ist, welches zumindest in Richtung der optischen Erfassungseinheit offen ist.

8. Vorrichtung nach einem der Ansprüche 6 oder 7, wobei das Objektiv der optischen Erfassungseinheit zwischen einer ersten, von dem Kontaktfluidspeicher (8) beabstandeten Position und einer zweiten, zumindest teilweise in dem Kontaktfluidspeicher (8) angeordneten Position bewegbar ist, in welcher das Objektiv das in dem Kontaktfluidspeicher (8) vorgesehene bzw. vorzusehende Fluid kontaktiert.

9. Vorrichtung nach Anspruch 8, wobei die optische Erfassungseinheit eine Fokusiereinheit aufweist, um das Objektiv zwischen der ersten und der zweiten Position zu bewegen.

10. Verfahren zur automatisierten Analyse von Objektträgern (6), umfassend die Schritte:
a) Bereitstellen einer Vorrichtung zum Analysieren von Objektträgern (6) mit einer optischen Erfassungseinheit und einer Haltevorrichtung für zumindest einen Objektträger (6),
b) Anordnen eines Kontaktfluidspeichers (8) in einer Objektträgeraufnahme einer Rahmeneinheit (2) der Haltevorrichtung, welche eine Vielzahl von in einer Längsrichtung (X) angeordneten Objektträgeraufnahmen zur Aufnahme der Objektträger (6) aufweist,
c) Positionieren der optischen Erfassungseinheit über dem Kontaktfluidspeicher (8),
d) Kontaktieren eines Objektivs der optischen Erfassungseinheit mit einem in dem Kontaktfluidspeicher (8) vorgesehenen Kontaktfluid, und
e) Positionieren des mit dem Kontaktfluid benetzten Objektivs an einem zu analysierenden Objektträger (6).

11. Verfahren nach Anspruch 10, wobei der Schritt d) des Kontaktierens des Objektivs mit dem Kontaktfluid durch Bewegen des Objektivs zwischen einer ersten, von dem Kontaktfluidspeicher (8) beabstandeten Position und einer zweiten, zumindest teilweise das in dem Kontaktfluidspeicher (8) vorgesehene Fluid kontaktierenden Position erfolgt.

12. Verfahren nach Anspruch 11, wobei die Bewegung des Objektivs zwischen der ersten und zweiten Position durch eine Veränderung des Fokus des Objektivs erfolgt.

13. Verfahren nach einem der Ansprüche 10 - 12, wobei der Schritt e) des Positionierens des Objektivs durch eine Verschiebung der Rahmeneinheit (2) der Haltevorrichtung im wesentlichen in Längsrichtung (X) mit Bezug auf die optische Erfassungseinheit erfolgt.

14. Verfahren nach einem der Ansprüche 10 - 13, weiterhin aufweisend die Schritte:
- Voranalysieren des zumindest einen Objektträgers (6) mittels der optischen Erfassungseinheit,
- Positionieren des Objektivs an dem Kontaktfluidspeicher (8),
- Kontaktieren des Objektivs mit dem Kontaktfluid, und
- Analysieren des zumindest einen Objektträgers (6) mittels der optischen Erfassungseinheit.
